# EUROPÄISCHE PATENTANMELDUNG

(11) **EP 1 458 063 A1**
(43) Veröffentlichungstag der Anmeldung: **15.09.2004**
(21) Anmeldenummer: 04005225.0
(22) Anmeldetag: 05.03.2004
(51) Int. Cl.: H01R 39/40, H02K 5/14

(54) **Kohlehalteranordnung**

(30) Priorität: 07.03.2003 DE 20303782 U
(71) Anmelder: SCHUNK Motorensysteme GmbH, D-27777 Ganderkesee (DE)
(72) Erfinder: Stoldt, Frank, 27777 Ganderkesee (DE)
(74) Vertreter: Stoffregen, Hans-Herbert, Dr. Dipl.-Phys.

(57) **Zusammenfassung**

Die Erfindung bezieht sich auf eine Kohlehalteranordnung mit zumindest einem auf einem Lagerschild (50) angeordneten Kohlehalter (52,54,56,58) mit aus diesem über einen Längsschlitz (66,69) abragender von einer in dem Kohlehalter axial verschiebbaren Kohlebürste (60,62,64) ausgehender Litze (68). Um Kurzschlüsse zwischen Litze und Lagerschild auszuschließen, wird vorgeschlagen, dass zumindest die Litze (68) abschnittsweise von einer diese zumindest gegenüber dem Lagerschild (50) elektrisch isolierenden Abschirmung (70,72,74,76) bereichsweise umgeben ist.

## Beschreibung

Die Erfindung bezieht sich auf eine Kohlehalteranordnung mit zumindest einem auf einem Lagerschild angeordneten Kohlehalter mit aus diesem vorzugsweise über einen Längsschlitz abragender von einer in dem Kohlehalter axial verschiebbaren Kohlebürste ausgehender Litze.

Mittels eines Kohlehalters soll eine Kohlebürste, die elektrischen Strom von einem ruhenden auf ein bewegbares Teil überträgt, in axialer Richtung federnd und in transversaler Richtung möglichst spielfrei und verdrehsicher geführt werden. Dabei kann die Litze mittig aus der rückseitigen Fläche der Kohlebürste in das Zentrum einer spiralförmigen Druckfeder geführt werden, wobei die Länge der Litze so bemessen ist, dass diese dem Verschleiß der Bürste folgend nachgeführt werden kann. Insbesondere bei unverbrauchter Kohlebürste kann jedoch der Nachteil eintreten, dass sich die Litze zwischen Windungen der Druckfeder verhakt, so dass die Gefahr einer Funktionsuntüchtigkeit gegeben ist. Daher hat sich bewährt, die Litze über einen in einer Längsseite des Kohlehalters verlaufenden Schlitz nach außen zu führen, aus dem die Litze in Abhängigkeit von dem Verbrauch der Kohlebürste mehr oder weniger vorsteht. Der Motor- oder Lagerschild ist sodann gegenüber der Litze elektrisch isoliert.

In der Praxis hat sich bei Lagerschildern, die aus elektrisch leitendem Material bestehen und kohlehalterseitig isoliert sind, der Nachteil gezeigt, dass bei Schwingung der Litze die Isolierung entfernt und somit ein Kurzschluss zwischen dieser und dem Lagerschild auftreten kann. Im Extremfall kann dabei die Litze durchschmoren mit der Folge, dass der Motor entweder in Dauerbetrieb läuft oder nicht mehr in Betrieb genommen werden kann.

Um dies zu vermeiden, ist es bereits bekannt, die Litze mit einem Silikonschlauch zu umgeben. Dies ist jedoch montagemäßig aufwendig und hat sich daher nicht durchgesetzt.

Der vorliegenden Erfindung liegt das Problem zu Grunde, eine Kohlehalteranordnung der eingangs genannten Art so weiterzubilden, dass sichergestellt ist, dass Kurzschlüsse zwischen Litze und Lagerschild ausgeschlossen werden.

Zur Lösung des Problems sieht die Erfindung im Wesentlichen vor, dass zumindest die Litze abschnittsweise von einer diese zumindest gegenüber dem Lagerschild elektrisch isolierenden Abschirmung bereichsweise umgeben ist. Insbesondere handelt es sich bei der elektrisch isolierenden Abschirmung um ein eigensteifes Element, das sich abschnittsweise zwischen dem Lagerschild und lagerschildseitiger Wandung des Kohlehalters erstrecken kann.

Bevorzugterweise weist das eigensteife Element eine topfförmige Geometrie auf, die den rückseitigen Bereich des Kohlehalters umgibt. Andere Geometrien sind gleichfalls denkbar. So kann die Abschirmung aus einem ersten sich zwischen Kohlehalter und Lagerschild erstreckenden Abschnitt, einem kohlehalterrückseitig verlaufenden zweiten Abschnitt sowie sich entlang der Seitenwandungen des Kohlehalters erstreckenden dritten und vierten Abschnitten bestehen, wobei lagerschildfernliegende Wandung des Kohlehalters unbedeckt sein kann.

Erfindungsgemäß wird folglich ein Kohlehalterisolierschutz zur Verfügung gestellt.

Dabei kann erfindungsgemäß mit konstruktiv einfachen Maßnahmen insbesondere eine einen Längsschlitz eines Kohlehalters durchsetzende Litze gegenüber einem Lagerschild elektrisch isoliert werden, indem diese zumindest bereichsweise umfangsseitig in ihren in Bezug auf den Kohlehalter freien Bereichen elektrisch isolierend abgeschirmt ist. Die Abschirmung ist ein gesondertes Element, das getrennt von der Litze moniert wird. Dabei kann sich die Abschirmung zwischen Kohlehalter und Lagerschild erstrecken, so dass eine zusätzliche Isolierung gegeben ist, die sicherstellt, dass ein Kurzschluss zwischen dem Kohlehalter und dem Lagerschild unterbleibt. Dabei ist aufgrund des üblicherweise vorhandenen Freiraums zwischen lagerschildseitiger Wandung des Kohlehalters und dem Lagerschild ein einfaches Montieren der Abschirmung möglich, indem diese zwischen dem Kohlehalter und dem Lagerschild festgeklemmt wird. Somit sind zusätzliche Befestigungsmaßnahmen nicht erforderlich, so dass auch bei rauen Bedingungen sichergestellt ist, dass die Abschirmung stets die Litze gegenüber dem Lagerschild oder einer auf gegenüberliegender Seite verlaufenden Abdeckung wie Gehäusedeckel elektrisch isoliert.

In Weiterbildung ist vorgesehen, dass die Abschirmung sich bis maximal in etwa Mitte des Längsschlitzes des Kohlehalters erstreckt. Durch diese Maßnahme ist hinreichend sichergestellt, dass die aus dem Schlitz hervorragende Litze den Lagerschild nicht berühren kann.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen:

Es zeigen:
- Fig. 1: einen Ausschnitt aus einem einen Kohlehalter aufweisenden Lagerschild,
- Fig. 2: eine Ausführungsform einer Abschirmung und
- Fig. 3: eine Prinzipdarstellung eines Lagerschildes mit Kohlehaltern.

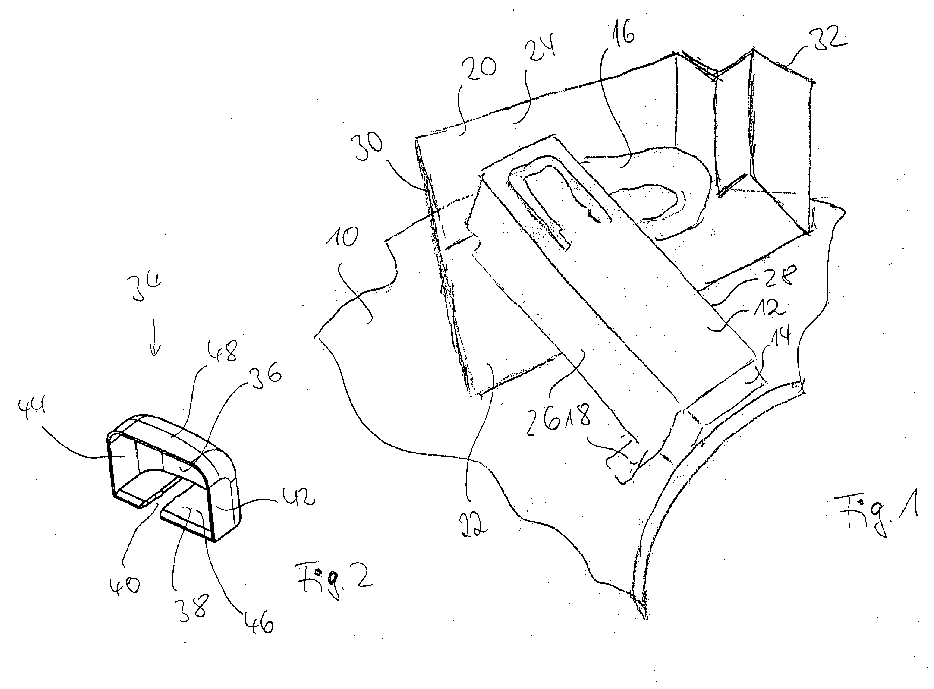

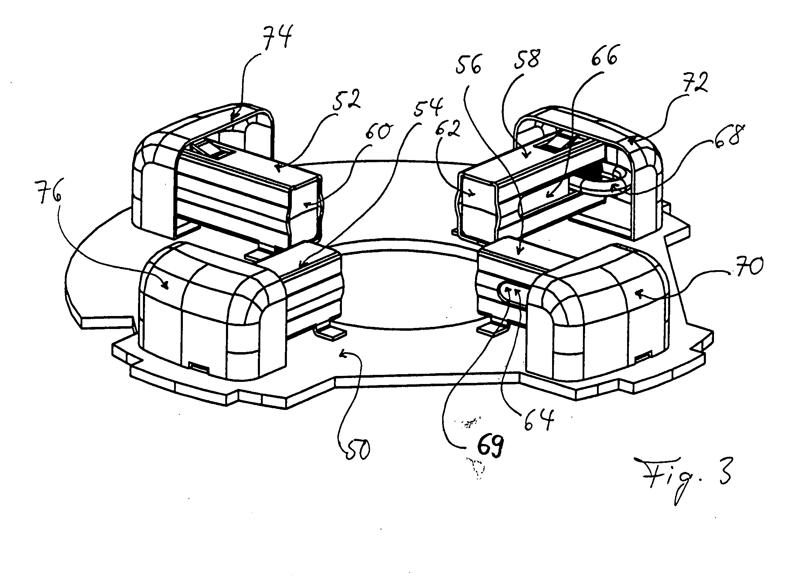

In Fig. 1 ist rein prinzipiell und im Ausschnitt ein Motor- oder Lagerschild 10 eines Elektromotors wie für den Kraftfahrzeugbereich bestimmten Lüftermotor dargestellt, auf dem in bekannter Weise vorzugsweise zwei oder vier Kohlehalter 12 (siehe Fig. 3) angeordnet sind, in deren Längsrichtungen Kohlebürsten 14 verschiebbar sind, um an einem Kommutator anzuliegen. Hierzu wirkt auf die Kohlebürste 14 ein innerhalb des Kohlehalters 12 verlaufendes Federelement wie Schraubenfeder ein. Insoweit wird auf hinlänglich bekannte Konstruktionen verwiesen.

Um über die Kohlebürste 14 Strom auf den Kommutator zu übertragen, geht von der Kohlebürste 14 eine im Ausführungsbeispiel einen Seitenlängsschlitz des Kohlehalters 12 durchsetzende Litze 16 aus, die am rückseitigen Ende des Kohlehalters 12 befestigt sein kann. Der Strom selbst fließt sodann über Befestigungsfüße 18 des Kohlehalters 12. Um sicherzustellen, dass der gewünschte Stromfluss gegeben ist, muss sichergestellt sein, dass weder zwischen den Wandungen des Kohlehalters 12 noch zwischen der Litze 16 und dem Lagerschild 10 Kurzschlüsse auftreten können. Hierzu ist es bekannt, dass der Lagerschild 10 kohlehalterseitig eine Isolierschicht aufweist, sofern der Kohlehalter 10 aus elektrisch leitendem Material wie Messing besteht.

Da jedoch zum Beispiel bei Schwingungen des Motors die Litze 10 reibend die Oberfläche des Lagerschildes 10 berühren kann, besteht die Gefahr, dass die Isolierung entfernt wird und somit zwischen Litze 16 und dem Lagerschild 10 ein Kurzschluss auftritt. Um dies zu vermeiden, ist erfindungsgemäß eine elektrisch isolierende Abschirmung 20 vorgesehen, die die Litze 16 zumindest lagerschildseitig 10 gegenüber dem Lagerschild 10 abschirmt.

Im Ausführungsbeispiel erstreckt sich die Abschirmung 20 zwischen Kohlehalter 12 und Lagerschild 10 mit einem ersten Abschnitt 22, entlang Rückseite des Kohlehalters 12 mit einem zweiten Abschnitt 24 sowie entlang Seitenwandungen 26 und 28 des Kohlehalters 12 mit dritten und vierten Abschnitten 30, 32, wobei der Abstand des vierten Abschnitts 32 zur Seitenwandung 28, die von der Litze 16 durchsetzt ist, größer als zwischen dem dritten Abschnitt 30 und der entlang dieser verlaufenden Seitenwandung 26 ist, wie die zeichnerische Darstellung verdeutlicht.

Die Erstreckung der Abschirmung 20 in Längsrichtung des Kohlehalters 12 ist allein in einem Umfang erforderlich, dass stets sichergestellt ist, dass die Litze 16 den Lagerschild 10 nicht berühren kann. Da die Litze 16 bei unverbrauchter Kohlebürste maximal seitlich aus dem Kohlehalter 12 vorsteht, ist infolgedessen nur ein kleiner Abschnitt der Litze 16 von der Abschirmung 20 zu umgeben, wie dies dem Grunde nach aus der Fig. 2 ersichtlich ist.

So ist in Fig. 2 eine als Kappe 34 ausgebildete elektrisch isolierende Abschirmung dargestellt. Die Kappe 34 besteht aus einer Rückwandung 36, die sich bei montierter Kappe 34 entlang Rückseite eines Kohlehalters erstreckt. Die Bodenwandung 38 der Kappe weist einen Schlitz 40 auf, dessen Breite der eines Befestigungsfußes des Kohlehalters angepasst ist, über den der Kohlehalter rückseitig auf einem Lagerschild befestigbar ist (siehe auch Fig. 3). Die Längenerstreckung von Seitenwandungen 42, 44 der Kappe 34 ist derart gewählt, dass eine Litze bei in Richtung Lagerschild erfolgender Bewegung nicht diesen, sondern ausschließlich die Bodenwandung 38 der Kappe 34, im Ausführungsbeispiel deren breiteren Abschnitt 46, und nicht den Lagerschild berührt. Lagerschildabgewandte Kopfwandung 48 der Kappe 34 dient als Abschirmung der Litze 16 gegenüber zum Beispiel einer Motorabdeckung wie Deckel, die bzw. der üblicherweise aus elektrisch leitendem Material besteht.

Die isolierenden Abschirmungen 20, 34 sind leicht montierbar, da deren Bodenwandungen 22, 38 zwischen Kohlehalter 12 und Lagerschild 10 fixierbar wie festklemmbar sind. Somit sind zusätzliche Befestigungsmittel nicht erforderlich.

Entsprechende Schutzkappen oder Abschirmungen 34 der Fig. 2 sind auch in der Prinzipdarstellung in Fig. 3 gezeichnet. Dabei gehen von einem Lagerschild 50 insgesamt vier dem Kohlehalter 12 entsprechende Kohlehalter 52, 54, 54, 58 aus, in denen axial verschiebbar Kohlebürsten 60, 62, 64 angeordnet sind. Wie anhand der Kohlehalter 56, 58 ersichtlich, weist jeder der Kohlehalter 52, 54, 56, 58 in einer seiner Seitenwandungen einen Längsschlitz 66, 69 auf, der jeweils von einer mit der Kohlebürste 60, 62 verbundenen Litze 68 durchsetzt ist. Damit die Litze 68 den Lagerschild 50 nicht berühren kann, ist die jeweilige Kohlehalterung 52, 54, 56, 58 rückseitig von einer Abschirmung 70, 72, 74, 76 umgeben, die erwähntermaßen der in Fig. 2 mit dem Bezugszeichen 34 entsprechenden gleichkommt.
Man erkennt insbesondere, dass die Längenerstreckung der Abdeckungen 70, 72, 74, 76 in Längsrichtung des jeweiligen Kohlehalters 52, 54, 56, 58 relativ gering ist, da die jeweilige Abschirmung 70, 72, 74, 76 allein sicherstellen soll, dass die Litze 68 nicht den Lagerschild 50 berührt. Auch erstreckt sich die jeweilige Abschirmung 70, 72, 74, 76 entlang jeweiliger Oberseite des Kohlehalters 52, 54, 56, 58, um sicherzustellen, dass dann, wenn entlang dieser eine Abdeckung wie Deckel eines Motors verläuft, ebenfalls ein Kontakt mit der Litze 68 ausgeschlossen wird.

## Patentansprüche

1. Kohlehalteranordnung mit zumindest einem auf einem Lagerschild (10, 50) angeordneten Kohlehalter (12, 52, 54, 56, 58) mit aus diesem vorzugsweise über einen Längsschlitz (66, 69) abragender von einer in dem Kohlehalter axial verschiebbaren Kohlebürste (14, 60, 62, 64) ausgehender Litze (16, 68),
**dadurch gekennzeichnet,**
**dass** zumindest die Litze (16, 68) abschnittsweise von einer diese zumindest gegenüber dem Lagerschild (10, 50) elektrisch isolierenden Abschirmung (20, 34, 70, 72, 74, 76) bereichsweise umgeben ist, die zumindest abschnittsweise zu der Litze beabstandet verläuft.

2. Kohlehalteranordnung nach Anspruch 2,
**dadurch gekennzeichnet,**
**dass** die Abschirmung (20, 34, 70, 72, 74, 76) ein eigensteifes Element ist, das zumindest abschnittsweise zwischen der Litze (16, 68) und dem Lagerschild (10, 50) verläuft.

3. Kohlehalteranordnung nach Anspruch 1 oder 2,
**dadurch gekennzeichnet,**
**dass** die elektrisch isolierende Abschirmung (20, 34, 70, 72, 74, 76) ein eigensteifes Element ist, das sich abschnittsweise zwischen dem Lagerschild (10, 50) und lagerschildseitiger Wandung des Kohlehalters (12) erstreckt.

4. Kohlehalteranordnung nach zumindest einem der vorhergehenden Ansprüche,
**dadurch gekennzeichnet,**
**dass** das eigensteifes Element (34, 70, 72, 74, 76) eine topfförmige Geometrie aufweist und rückseitigen Bereich des Kohlehalters (12, 52, 54, 56, 58) umgibt.

5. Kohlehalteranordnung nach zumindest einem der vorhergehenden Ansprüche,
**dadurch gekennzeichnet,**
**dass** sich die Abschirmung (20, 34, 70, 72, 74, 76) zwischen Rückseite und etwa Mitte des Längsschlitzes des Kohlehalters (12, 52, 54, 56, 58) erstreckt.

6. Kohlehalteranordnung nach zumindest einem der vorhergehenden Ansprüche,
**dadurch gekennzeichnet,**
**dass** sich die Abschirmung (20, 34, 70, 72, 74, 76) zumindest seitlich und lagerschildseitig entlang der Litze (16, 68) erstreckt.

7. Kohlehalteranordnung nach zumindest einem der vorhergehenden Ansprüche,
**dadurch gekennzeichnet,**
**dass** sich die Abschirmung (20, 34, 70, 72, 74, 76) entlang lagerschildseitig abgewandter Seite der Litze (16, 68) erstreckt.

8. Kohlehalteranordnung nach zumindest einem der vorhergehenden Ansprüche,
**dadurch gekennzeichnet,**
**dass** ein lagerschildseitig verlaufender Abschnitt (22, 38) der Abschirmung (20, 34) eine von einem Befestigungsfuß des Kohlehalters (12, 52, 54, 56, 58) durchsetzte Aussparung wie einen Schlitz (40) aufweist.

9. Kohlehalteranordnung nach zumindest einem der vorhergehenden Ansprüche,
**dadurch gekennzeichnet,**
**dass** die Abschirmung (20, 34, 70, 72, 74, 76) zwischen dem Kohlehalter (12, 52, 54, 56, 58) und dem Lagerschild (10, 50) fixiert wie festgeklemmt ist.
